# EUROPÄISCHE PATENTSCHRIFT

(11) **EP 3 126 246 B1**
(45) Veröffentlichungstag und Bekanntmachung des Hinweises auf die Patenterteilung: **26.12.2018**
(21) Anmeldenummer: 15710742.6
(22) Anmeldetag: 11.03.2015
(51) Int. Cl.: B65B 25/00, B65B 39/00, B65B 3/04, B65B 3/22, B67C 3/26, B67C 3/28, C22C 14/00, C22C 21/02

(54) **VORRICHTUNG ZUR VERÄNDERUNG DER STRAHLFORM VON FLIESSFÄHIGEN PRODUKTEN**
APPARATUS FOR MODIFYING THE STREAM SHAPE OF A FLUENT PRODUCT
DISPOSITIF POUR MODIFIER LA FORME DE L'ÉCOULEMENT D'UN PRODUIT FLUIDE

(30) Priorität: 31.03.2014 DE 102014104480
(43) Veröffentlichungstag der Anmeldung: 08.02.2017
(73) Patentinhaber: SIG Technology AG, 8212 Neuhausen (CH)
(72) Erfinder: HEUSER, Richard, 52134 Herzogenrath (DE); RABE, Christian, 52074 Aachen (DE)
(74) Vertreter: Cohausz & Florack
(86) Internationale Anmeldenummer: PCT/EP2015/055020
(87) Internationale Veröffentlichungsnummer: WO 2015/150032

(56) Entgegenhaltungen:
- WO-A1-01/80662
- WO-A1-01/80662
- WO-A1-01/89707
- WO-A1-95/26906
- CA-C- 1 290 974
- JP-A- H0 826 220

## Beschreibung

Die Erfindung betrifft eine Vorrichtung zur Veränderung der Strahlform von fließfähigen Produkten, insbesondere von Nahrungsmitteln, umfassend einen Eintrittsbereich zum Eintritt der fließfähigen Produkte, einen Austrittsbereich zum Austritt der fließfähigen Produkte, und mehrere Kanäle zur Durchleitung der fließfähigen Produkte, wobei jeder Kanal wenigstens einen dem Eintrittsbereich zugeordneten Einlass und wenigstens einen dem Austrittsbereich zugeordneten Auslass aufweist.

Die Erfindung betrifft zudem die Verwendung einer derartigen Vorrichtung zur Abfüllung von Nahrungsmitteln, insbesondere zur aseptischen Abfüllung von Nahrungsmitteln.

Die Erfindung betrifft schließlich ein Verfahren zur Herstellung einer derartigen Vorrichtung.

Auf dem Gebiet der Verpackungstechnik sind zahlreiche Möglichkeiten bekannt, fließfähige Produkte in die dafür vorgesehenen Verpackungen zu füllen. Bei den fließfähigen Produkten kann es sich beispielsweise um Nahrungsmittel wie etwa Milch, Fruchtsaft, Saucen oder Joghurt handeln. Als Verpackungen können beispielsweise Verbundverpackungen mit Lagen aus Pappe und Kunststoff eingesetzt werden.

Ein wichtiger Schritt bei der Befüllung der Verpackungen besteht darin, die fließfähigen Produkte möglichst schnell in die Verpackungen zu füllen, um eine schnelle Taktung und somit hohe Stückzahlen erreichen zu können. Trotz der hohen Strömungsgeschwindigkeit soll die Befüllung jedoch weitgehend ohne Spritzer und Schaumbildung erfolgen, um die hygienischen Anforderungen erfüllen zu können und Verunreinigungen an der Verpackung oder der Abfüllmaschine zu vermeiden.

Besonders hohe hygienische Anforderungen treten bei Nahrungsmitteln auf, die unter sterilen, also keimfreien Bedingungen abgefüllt werden.

Den hohen Anforderungen kann nur genügt werden, wenn der Befüllvorgang an individuelle Faktoren wie beispielsweise die Eigenschaften des abzufüllenden Produkts und das Volumen sowie die Form der Verpackung angepasst wird. Die Anpassung beinhaltet regelmäßig eine Einstellung der Durchflussmenge und der Durchflussgeschwindigkeit. Darüber hinaus wird oftmals auch die Fülldüse an das abzufüllende Produkt und die Verpackung angepasst und gegebenenfalls ausgetauscht. Denn die Fülldüse bestimmt maßgeblich die Form und das Geschwindigkeitsprofil des Füllstrahls. Zudem ist die Fülldüse für eine tropfenfreie Befüllung verantwortlich. Hierzu wird der Volumenstrom vor dem Austritt aus der Fülldüse häufig in mehrere Teilströme aufgeteilt, die durch einzelne Kanäle geleitet werden. Dies hat den Vorteil, dass das abzufüllende Produkt mit einer größeren Wandfläche in Berührung kommt, wodurch bei einer Unterbrechung der Befüllung die Restmenge des abzufüllenden Produkts sicher in den Kanälen gehalten wird und nicht unkontrolliert auf die Verpackung oder die Abfüllmaschine tropft ("Kapillarwirkung").

Aus dem Gebiet der Sanitärtechnik sind zahlreiche Vorrichtungen zur Veränderung der Form von Wasserstrahlen bekannt. Derartige Vorrichtungen sind auch unter der Bezeichnung "Strahlregler" bekannt und werden üblicherweise an dem Wasserauslauf eines Wasserhahns montiert. Die bekannten Strahlregler weisen häufig mehrere hintereinander angeordnete Drahtgitter auf, die auch als "Siebe" bezeichnet werden. Zusätzlich weisen viele Strahlregler mehrere hintereinander angeordnete gelochte Einsätze, beispielsweise Lochbleche auf. Das Wasser wird durch die Siebe und Einsätze geleitet, um die Eigenschaften des Wasserstrahls zu beeinflussen. Derartige Strahlregler aus dem Gebiet der Sanitärtechnik werden beispielsweise in der DE 30 00 799 A1 oder der WO 01/94707 A1 beschrieben.

Die Lösungen aus dem Gebiet der Sanitärtechnik sind jedoch regelmäßig nicht auf das Gebiet der Lebensmitteltechnik übertragbar. Dies liegt zunächst an der Tatsache, dass sämtliche aus dem Bereich der Sanitärtechnik bekannten Lösungen auf Wasser als Strömungsmedium ausgerichtet sind. Lebensmittel wie Milch oder Fruchtsaft haben jedoch eine andere Viskosität als Wasser und weisen ggf. sogar stückige Bestandteile wie Fruchtfleisch auf. Ein weiterer Unterschied liegt darin, dass Strahlregler aus dem Gebiet der Sanitärtechnik im Hinblick auf die Anforderungen von Endverbrauchern gestaltet sind und insbesondere auch rein subjektiv zu beurteilende Eigenschaften von Wasserstrahlen beeinflussen sollen (Strömungsgeräusch, Gefühl des Wasserstrahls, etc.). Zudem wird das entnommene Wasser unmittelbar verbraucht, so dass eine geringe Belastung mit Mikroorganismen für den menschlichen Körper tolerierbar ist. Soll das Nahrungsmittel jedoch über einen längeren Zeitraum von mehreren Tagen, Wochen oder sogar Monaten und möglicherweise ohne Kühlung gelagert werden, reichen die an die aus der Sanitärtechnik bekannten Strahlregler gestellten hygienischen Anforderungen nicht aus. Strahlregler aus dem Bereich der Sanitärtechnik sind daher in den meisten Fällen zur Abfüllung von Nahrungsmitteln ungeeignet.

Vorrichtungen zur Veränderung der Strahlform von fließfähigen Produkten sind auch aus dem Gebiet der Abfüllung von Nahrungsmitteln bekannt. Aus der DE 26 01 421 B1 ist beispielsweise ein Mundstück einer Zapfstelle für Milch bekannt. Das Mundstück umfasst ein rundes Rohrstück, an dessen unterem Rand ein Kragen vorgesehen ist. Auf dem Kragen ist eine Lochplatte angeordnet, auf der eine Scheibe aus einem offenporigen Schaumstoff liegt. Der Schaumstoff weist eine besonders große Oberfläche auf und sorgt dafür, dass die abzufüllende Milch bei einer Unterbrechung der Abfüllung nicht nachtropft. Eine vergleichbare Düse mit einer Seitenwand aus einem porösen Material ist aus der US 3,698,452 A bekannt.

Der Einsatz von porösen Materialien wie Schaumstoff hat den Vorteil einer sehr großen Kontaktfläche zwischen der abzufüllenden Flüssigkeit und dem Schaumstoff.

Durch die große Kontaktfläche wird aufgrund der Kapillarwirkung eine unerwünschte Tropfenbildung verhindert. Der Einsatz von Schaumstoffen hat jedoch auch Nachteile. Zunächst lassen sich Schaumstoffe sehr schlecht reinigen, so dass die hygienischen Anforderungen nur durch den ständigen Austausch der Schaumstoffscheiben erfüllt werden können. Auch der Einsatz von Drahtgittern oder Sieben ist hygienisch bedenklich, da sie zahlreiche schwer zu reinigende Stellen aufweisen. Zudem weisen Schaumstoffe, Gitter oder Siebe keine definierte Geometrie auf, so dass eine gezielte Beeinflussung der Strömungsrichtung und/oder Strömungsgeschwindigkeit einzelner Teilströme nicht möglich erscheint.

Eine weitere Fülldüse für die Abfüllung von Nahrungsmitteln ist beispielsweise aus der EP 2 078 678 A1 bekannt. Zur Aufteilung des Volumenstromes weist die dort gezeigte Fülldüse eine austauschbare Platte mit zahlreichen Löchern auf. Die Löcher sind zylindrisch geformt und verlaufen parallel zueinander, um mit der Platte einen besonders geraden Füllstrahl zu erzeugen ("flow straightening plate").Während die Einlässe der Löcher in einer Ebene liegen, sind die Auslässe der Löcher auf einer gekrümmten Fläche angeordnet, so dass die Löcher - in Strömungsrichtung betrachtet - unterschiedlich lang sind. Durch die Variation der Länge der Löcher soll die Strömungsgeschwindigkeit beeinflusst werden. Insbesondere soll die Strömungsgeschwindigkeit in der Mitte des Füllstrahls durch längere Löcher und die dadurch bedingte höhere Reibung stärker verlangsamt werden als in den Randbereichen des Füllstrahls.

Auch die aus der EP 2 078 678 A1 bekannte Fülldüse hat mehrere Nachteile. Zunächst muss aufgrund der zweiteiligen Konstruktion die Platte gegenüber dem Körper der Fülldüse abgedichtet werden. In dem abzudichtenden Spalt zwischen Platte und Körper können sich Produktreste ablagern, was hygienisch problematisch ist. Ein weiterer Nachteil liegt in der unterschiedlichen Länge der Löcher. Denn ein gekrümmter Austrittsbereich der Platte führt dazu, dass sich die Teilströme des abzufüllenden Produkts zu unterschiedlichen Zeitpunkten von der Unterseite der Platte ablösen und zudem einer unterschiedlich großen Fallhöhe bis zum Boden der Verpackung ausgesetzt werden. Diejenigen Teilströme, die durch kürzere Löcher geführt werden und sich früher von der Unterseite der Platte ablösen, werden früher einer Fallbeschleunigung ausgesetzt als diejenigen Teilströme, die sich zu diesem Zeitpunkt noch in den längeren Löchern befinden. Aufgrund der unterschiedlichen Fallhöhen der Teilströme werden diese im freien Fall auch unterschiedlich lange beschleunigt und erreichen einen unterschiedlich großen Geschwindigkeitszuwachs. Dies hat zur Folge, dass das an der Unterseite der Platte eingestellte Geschwindigkeitsprofil im freien Fall wieder verändert wird. Das für die Spritzerbildung maßgebliche Geschwindigkeitsprofil beim Aufprall des Füllstrahls auf den Boden der Verpackung lässt sich daher mit der vorgeschlagenen Lösung nur sehr unpräzise einstellen.

Ein Verfahren zur Extrusion von Eiskrem und Vorrichtung hierfür sind aus der WO 01/80662 A1 bekannt. Ein Ventil zum Abfüllen von Flüssigkeiten in Verpackungen ist aus der WO 95/26906 A1 bekannt.

Der Erfindung liegt daher die Aufgabe zugrunde, die eingangs genannte und zuvor näher beschriebene Vorrichtung derart auszugestalten und weiterzubilden, dass sich die Form und das Geschwindigkeitsprofil des Füllstrahls einfach und schonend einstellen lassen.

Diese Aufgabe wird durch eine Vorrichtung nach Patentanspruch 1 gelöst.

Die erfindungsgemäße Vorrichtung zeichnet sich zunächst durch einen Eintrittsbereich zum Eintritt der fließfähigen Produkte sowie durch einen Austrittsbereich zum Austritt der fließfähigen Produkte aus. Zwischen dem Eintrittsbereich und dem Austrittsbereich sind mehrere Kanäle zur Durchleitung der fließfähigen Produkte angeordnet. Jeder der Kanäle weist wenigstens einen Einlass auf, der dem Eintrittsbereich zugeordnet ist. Zudem weist jeder der Kanäle wenigstens einen Auslass auf, der dem Austrittsbereich zugeordnet ist. Vorzugsweise weist jeder der Kanäle genau einen Einlass auf, der dem Eintrittsbereich zugeordnet ist und weist zudem genau einen Auslass auf, der dem Austrittsbereich zugeordnet ist. Alternativ kann sich ein Arm eines Kanals auch in zwei oder mehr Arme aufteilen, so dass dieser Kanal zwar nur einen Einlass, jedoch zwei oder mehr Auslässe aufweist. Ebenso können sich zwei oder mehr Arme zu einem Arm vereinigen, so dass dieser Kanal mehrere Einlässe, jedoch nur einen Auslass aufweist. Die Kanäle können also Verzweigungen aufweisen.

Die Kanäle können in einen zentralen Kanal und in einen oder mehrere außermittige Kanäle eingeteilt werden. Unter einem zentralen Kanal wird ein Kanal verstanden, der wenigstens abschnittsweise die Mittelachse der Vorrichtung schneidet, insbesondere jedoch entlang seiner gesamten Länge auf der Mittelachse der Vorrichtung liegt. Unter einem außermittigen Kanal wird hingegen ein Kanal verstanden, der die Mittelachse der Vorrichtung an keiner Stelle schneidet. Die Kanäle können je nach Anforderung des abzufüllenden Füllgutes runde, ovale oder vieleckige Querschnittsflächen aufweisen.

Indem erfindungsgemäß wenigstens einer der Kanäle wenigstens abschnittsweise gekrümmt ist, kann die Strömungsrichtung der durch diesen Kanal fließenden Teilströmung besonders einfach geändert werden. Zudem kann die Teilströmung durch einen gekrümmten Kanal besonders gleichmäßig und somit produktschonend aus einer vertikalen Richtung in eine gegenüber der Mittelachse geneigte Richtung umgelenkt werden. Bei dem abschnittsweise gekrümmten Kanal kann es sich um den zentralen Kanal und/oder um einen oder mehrere der außermittigen Kanäle handeln. Eine Krümmung wird - übereinstimmend mit dem mathematischen Verständnis - als die Abweichung einer Kurve/Fläche von einer Geraden/Ebene verstanden. Der Rand eines Kreises ist beispielsweise gekrümmt, weshalb der Grad einer Krümmung auch als "Krümmungsradius" bezeichnet wird (starke Krümmung = kleiner Krümmungsradius und umgekehrt). Eine Krümmung ist zu unterscheiden von einer Neigung: Wenn der Verlauf eines Kanals als mathematische Funktion beschrieben wird, stellt die erste Ableitung seine Neigung dar und die zweite Ableitung stellt seine Krümmung dar. Eine mathematische Funktion ist daher in denjenigen Bereichen "gekrümmt", in denen ihre zweite Ableitung ungleich Null ist. Die Krümmung der Kanäle kann konstant sein (wie bei einem Kreis oder einer Spirale) oder sich verändern (wie bei einem Oval). Die Krümmung kann nach innen - also zur Mittelachse - oder nach außen gerichtet sein. Alternativ hierzu kann sich die Krümmung aus einer spiralförmigen Gestaltung der Kanäle ergeben, so dass der oder die Kanäle ein- oder mehrgängig schraubenlinienförmig von dem Eintrittsbereich zu dem Austrittsbereich verlaufen. Das Vorzeichen der Krümmung kann gleich bleiben oder sich verändern (von "Linkskurve" zu "Rechtskurve"). Die Vorrichtung kann aus Metall, insbesondere Edelstahl, Kunststoff, insbesondere PEEK (Polyetheretherketon) oder aus Keramik hergestellt sein.

Nach einer Weiterbildung der Erfindung ist vorgesehen, dass alle außermittigen Kanäle wenigstens abschnittsweise gekrümmt sind. Die Vorteile eines gekrümmten Kanals sind besonders groß, wenn nicht nur einige, sondern sämtliche außermittigen Kanäle wenigstens abschnittsweise gekrümmt sind. Sofern auch ein zentraler Kanal vorhanden ist, kann auch dieser Kanal wenigstens abschnittsweise gekrümmt sein, so dass alle Kanäle wenigstens abschnittsweise gekrümmt sind.

Eine weitere Lehre der Erfindung sieht vor, dass wenigstens einer der Kanäle durchgehend gekrümmt ist. Unter einer durchgehenden Krümmung wird eine Krümmung verstanden, die sich über die gesamte Länge des Kanals - also von seinem Einlass oder seinen Einlässen bis zu seinem Auslass oder seinen Auslässen - erstreckt. Durch die Ausnutzung der gesamten Länge der Kanäle kann der zur Erreichung einer gewünschten Veränderung der Strömungsrichtung erforderliche Krümmungsgrad oder -radius geringer ausfallen. Dies hat den Vorteil einer besonders schonenden Umlenkung der Strömung. Bei dem durchgehend gekrümmten Kanal kann es sich um den zentralen Kanal und/oder um einen oder mehrere der außermittigen Kanäle handeln.

Nach einer Ausgestaltung der Erfindung ist vorgesehen, dass alle außermittigen Kanäle durchgehend gekrümmt sind. Die Vorteile eines durchgehend gekrümmten Kanals sind besonders groß, wenn nicht nur einige, sondern sämtliche außermittigen Kanäle durchgehend gekrümmt sind. Sofern auch ein zentraler Kanal vorhanden ist, kann auch dieser Kanal durchgehend gekrümmt sein, so dass alle Kanäle durchgehend gekrümmt sind.

Erfindungsgemäß ist zudem vorgesehen, dass die Wandflächen der Kanäle einstückig ausgebildet sind. Durch eine einstückige Ausbildung der Wandflächen können insbesondere stetige, glatte Wandflächen erreicht werden. Dies hat den Vorteil eines geringen Strömungswiderstandes. Zudem lassen sich Kanäle mit glatten Wandflächen besonders einfach und wirksam reinigen, so dass auch strenge hygienische Anforderungen erfüllt werden können. Kanäle mit einstückigen Wandflächen haben daher mehrere Vorteile gegenüber Wandflächen mit geometrisch undefinierter Fläche (z.B. geschäumte Materialien) oder gegenüber mehrteiligen Wandflächen mit Kanten und Sprüngen (z.B. mehrere hintereinander angeordnete Lochplatten). Bei sich teilenden oder sich vereinigenden Kanälen sind die Wandflächen vorzugsweise auch in den Bereichen der Verzweigungen einstückig ausgebildet. Eine einstückige Ausbildung der Wandflächen der Kanäle kann beispielsweise dadurch erreicht werden, dass die Vorrichtung entweder im Bereich der Kanäle oder insgesamt einstückig ausgebildet ist. Dies kann etwa durch generative Fertigungsverfahren erreicht werden.

Gemäß einer von zwei erfindungsgemäßen Alternativen weist die Vorrichtung ein mehrteiliges Gehäuse auf. Durch den mehrteiligen Aufbau können unterschiedliche Fertigungsverfahren eingesetzt und kombiniert werden, was eine besonders kostengünstige Herstellung erlaubt. Beispielsweise kann derjenige Teil des Gehäuses, in dem die gekrümmten Kanäle angeordnet sind, durch ein generatives Fertigungsverfahren (z.B. Laserschmelzen) hergestellt werden, während die übrigen Teile des Gehäuses durch herkömmliche Fertigungsverfahren hergestellt werden (z.B. Gussverfahren). Eine weitere Reduktion der Herstellungskosten kann erreicht werden, indem auch die verwendeten Materialien auf die (Mindest-)Anforderungen der unterschiedlichen Herstellungsverfahren abgestimmt werden.

Eine Weiterbildung der Erfindung sieht vor, dass die Einlässe und/oder die Auslässe der Kanäle in einer Ebene angeordnet sind. Die Anordnung der Einlässe in einer Ebene hat den Vorteil, dass alle Einlässe gleichzeitig durch ein besonders einfach geformtes, insbesondere durch ein ebenes Dichtelement sicher abgedichtet werden können. Die Anordnung der Auslässe in einer Ebene hat neben einer einfachen Reinigung den Vorteil, dass sämtliche Teilströmungen sich gleichzeitig von der Unterseite der Vorrichtung ablösen und somit gleichzeitig der Fallbeschleunigung ausgesetzt werden. Vorzugsweise ist die Ebene, in der die Einlässe der Kanäle angeordnet sind, parallel zu der Ebene, in der die Auslässe der Kanäle angeordnet sind. Dies hat - jedenfalls bei gleich stark gekrümmten Kanälen - den Vorteil, dass die Kanäle gleich lang sind und somit die reibungsbedingte Verlangsamung der Teilströmungen in allen Kanälen etwa gleich groß ist. Alternativ hierzu kann die Ebene, in der die Auslässe der Kanäle angeordnet sind, gegenüber der Ebene, in der die Einlässe der Kanäle angeordnet sind, geneigt sein. Hierdurch lässt sich in Verbindung mit entsprechend gekrümmten Kanälen eine starke seitliche Ausrichtung des Füllstrahls erreichen.

Gemäß einer Ausbildung der Erfindung ist vorgesehen, dass die Anzahl der Kanäle wenigstens 5 beträgt und insbesondere im Bereich zwischen 10 und 100 liegt. Die Gesamtströmung soll nach dieser Ausbildung in eine besonders hohe Anzahl von Teilströmungen aufgeteilt werden. Dies hat den Vorteil, dass für jede Teilströmung die Geschwindigkeit und Richtung dieser Teilströmung individuell eingestellt werden kann, so dass sich auch komplexe Formen und Geschwindigkeitsprofile des Füllstrahls erzielen lassen. Zudem führt eine hohe Anzahl von Kanälen zu einer größeren Kontaktfläche zwischen Strömung und Kanal, was aufgrund der Kapillarwirkung die Tropfgefahr bei einer Unterbrechung der Befüllung verringert.

Eine Ausgestaltung der Erfindung zeichnet sich dadurch aus, dass die Summe der Einlässe eines Kanals eine erste Querschnittsfläche bilden und die Summe der Auslässe eines Kanals eine zweite Querschnittsfläche bilden, und dass die zweite Querschnittsfläche wenigstens eines Kanals größer ist als die erste Querschnittsfläche dieses Kanals. Vorzugsweise ist die zweite Querschnittsfläche jedes Kanals größer ist als die erste Querschnittsfläche dieses Kanals. Mit anderen Worten vergrößert sich die Querschnittsfläche der Kanäle in Strömungsrichtung, also von dem Einlass oder den Einlässen in Richtung des Auslasses oder der Auslässe. Die Vergrößerung der Querschnittsfläche kann gleichmäßig und stetig oder monoton erfolgen. Alternativ kann die Größe der Querschnittsfläche auch zunächst abnehmen, sich dann aber über die Ausgangsgröße hinaus vergrößern. Eine derart komplexe Geometrie kann beispielsweise durch generative Fertigungsverfahren erreicht werden. Nach den Gesetzen der Strömungsmechanik, insbesondere dem Gesetz von Bernoulli führt eine Vergrößerung der Querschnittsfläche zu einer proportionalen Abnahme der Strömungsgeschwindigkeit. Die beschriebene Ausbildung der Kanäle führt demnach zu einer Verlangsamung der in dem Kanal fließenden Teilströmung. Der Quotient aus der ersten Querschnittsfläche und der zweiten Querschnittsfläche ist daher stets kleiner als eins und stellt ein Maß für den Grad der Verlangsamung dar. Dieser Quotient kann daher auch als "Verlangsamungsfaktor" bezeichnet werden; sein Kehrwert kann demgegenüber als "Beschleunigungsfaktor" bezeichnet werden.

Der Quotient aus der Summe der ersten Querschnittsflächen aller Kanäle und der Summe der zweiten Querschnittsflächen aller Kanäle kann im Bereich zwischen 0,35 und 0,75 liegen. Dies bedeutet, dass die gesamte Querschnittsfläche am Einlass der Kanäle nur etwa 35% bis 75% der gesamten Querschnittsfläche am Auslass der Kanäle beträgt. Es erfolgt daher eine deutliche Vergrößerung der gesamten Querschnittsfläche in Strömungsrichtung und somit eine Verlangsamung der gesamten Strömung.

Alternativ oder zusätzlich kann der Quotient aus der ersten Querschnittsfläche und der zweiten Querschnittsfläche bei jedem Kanal im Bereich zwischen 0,35 und 0,75 liegen. Dies bedeutet, dass nicht nur die Summe der Querschnittsflächen, sondern die Querschnittsfläche am Einlass oder an den Einlässen jedes einzelnen Kanals nur etwa 35% bis 75% der Querschnittsfläche am Auslass oder an den Auslässen dieses Kanals beträgt. Jeder einzelne Kanal soll demnach zu einer deutlichen Vergrößerung der Querschnittsfläche und daraus folgenden Verlangsamung der Strömung beitragen, die innerhalb des genannten Bereiches liegt. Es kann vorgesehen sein, dass der Quotient aus der ersten Querschnittsfläche und der zweiten Querschnittsfläche - also der Verlangsamungsfaktor - bei jedem Kanal identisch ist; alternativ können die Quotienten auch innerhalb des genannten Bereiches zwischen den Kanälen variieren, so dass die Verlangsamung der Strömung für jeden Kanal individuell angepasst werden kann.

In weiterer Ausgestaltung der Erfindung wird vorgeschlagen, dass die Mittelachsen der außermittigen Kanäle gegenüber der Mittelachse der Vorrichtung um einen Neigungswinkel geneigt angeordnet sind. Unter der Mittelachse eines Kanals wird eine Verbindungslinie zwischen dem Einlass bzw. den Einlässen und dem Auslass bzw. den Auslässen desselben Kanals verstanden; aufgrund der Krümmung der Kanäle muss diese Verbindungslinie nicht zwingend durchgehend innerhalb des Kanals verlaufen. Durch die Neigung der außermittigen Kanäle können die Teilströmungen in diesen Kanälen neben einem vertikalen Impuls auch einen horizontalen Impuls erhalten. Dies erlaubt eine besonders variable Gestaltung der Form des Füllstrahls. Die betroffenen Kanäle können - in Strömungsrichtung gesehen - nach außen oder nach innen geneigt sein. Eine Neigung nach außen spreizt oder teilt den Füllstrahl und lenkt ihn seitlich an die Wände der Verpackung. Auf diese Weise wird die Verpackung besonders schonend und weitgehend ohne Schaumbildung befüllt. Eine Neigung nach innen ermöglicht hingegen einen besonders spitzen, konzentrierten Füllstrahl. Der Neigungswinkel kann im Bereich zwischen 1° und 30° liegen. Der Neigungswinkel ist derjenige Winkel, der sich zwischen der Mittelachse der Vorrichtung und der Mittelachse des entsprechenden Kanals einstellt. Der angegebene Bereich kann wiederum eine Neigung nach außen oder eine Neigung nach innen betreffen. Vorzugsweise beträgt der Neigungswinkel bei nach innen gerichteter Neigung zwischen 1° und 6° und bei nach außen gerichteter Neigung zwischen 5° und 15°.

Nach einer Ausbildung der Erfindung ist vorgesehen, dass wenigstens ein Kanal wenigstens eine Verzweigung aufweist. Unter einer Verzweigung wird verstanden, dass ein Arm eines Kanals sich in zwei oder mehr Arme aufteilt oder dass sich zwei oder mehr Arme zu einem Arm vereinigen. Sowohl der zentrale Kanal als auch die außermittigen Kanäle können eine oder mehrere Verzweigungen aufweisen. Bei einem Kanal mit Verzweigungen besteht die Gefahr, dass die Strömungen in den unterschiedlichen Armen des Kanals sich gegenseitig beeinflussen (Prinzip der kommunizierenden Röhren). Dies kann bei einem Kanal mit mehreren Auslässen zu einem Nachlaufen des Füllgutes oder zu einer Teilentleerung des Kanals führen. Indem die Verzweigung auf einer definierten Höhe - beispielsweise im unteren Drittel des Gehäuses - vorgesehen ist, kann jedoch eine kontrollierte Teilentleerung des Kanals erreicht werden, die Verstopfungen durch stückige Partikel vorbeugt. Durch Verzweigungen kann zudem eine besonders flexible Einstellung der Form und des Geschwindigkeitsprofils des Füllstrahls erreicht werden.

Die zuvor beschriebene Vorrichtung kann in allen dargestellten Ausgestaltungen besonders gut zur Abfüllung von Nahrungsmitteln, insbesondere zur aseptischen Abfüllung von Nahrungsmitteln verwendet werden. Bei den Nahrungsmitteln kann es sich beispielsweise um Milch, Fruchtsaft, Saucen oder Joghurt handeln.

Die eingangs beschriebene Aufgabe wird auch durch ein Verfahren zur Herstellung einer Vorrichtung nach einem der Ansprüche 1 bis 9 gelöst, wobei das Verfahren den folgenden Schritt umfasst: a) Erzeugen der Vorrichtung mit den darin angeordneten Kanälen durch ein generatives Fertigungsverfahren.

Generative Fertigungsverfahren gehören nach herrschender Meinung zu den "Urformenden Fertigungsverfahren" (Hauptgruppe 1 nach DIN 8580). Es gibt jedoch auch Ähnlichkeiten zum Fertigungsverfahren "Beschichten" (Hauptgruppe 5 nach DIN 8580). Bei generativen Fertigungsverfahren erfolgt die Fertigung von Bauteilen auf der Grundlage von formlosen (z.B. Flüssigkeiten, Pasten oder Pulver) oder formneutralen (Bänder, Drähte, Platten, Folien) Ausgangsstoffen, die durch chemische und/oder physikalische Prozesse geformt werden. Bei diesen Prozessen kann es sich beispielsweise um Aufschmelzen und Erstarren, Verkleben durch Binder oder Polymerisation handeln. Gegenüber konventionellen Verfahren bieten generative Fertigungsverfahren erhebliche Vorteile hinsichtlich der geometrischen Gestaltung der Bauteile. Beispielsweise können durch generative Fertigungsverfahren Hinterschnitte und komplexe Strukturen im Bauteilinneren erzeugt werden, die mit herkömmlichen Fertigungsverfahren nur mit hohem Aufwand oder überhaupt nicht herstellbar sind. Ein weiterer Vorteil liegt darin, dass Werkzeuge und Formen - wie sie etwa beim Gießen erforderlich sind - entfallen. Generative Fertigungsverfahren sind zwar recht zeitaufwändig und eignen sich daher eher nicht für eine Serienfertigung (typische Aufbauraten betragen wenige cm³ pro Stunde). Gleichwohl können Einzelstücke oder kleine Serien von Bauteilen auch bei außerordentlich komplexer Geometrie problemlos hergestellt werden. Bei der Herstellung der zuvor beschriebenen Vorrichtung zeichnen sich generative Fertigungsverfahren insbesondere bei der Erzeugung der komplexen Geometrie der gekrümmten Kanäle aus. Bei bekannten Vorrichtungen dieser Art werden die Kanäle üblicherweise gebohrt oder durch Drahterodieren geschnitten; diese Fertigungsverfahren erlauben jedoch nicht die erfindungsgemäße gekrümmte Ausgestaltung der Kanäle. Mit generativen Fertigungsverfahren können Bauteile aus Metall oder Kunststoff hergestellt werden. Für die Verarbeitung von Metallen bieten sich die nachfolgend beschriebenen Verfahren Sintern oder Schmelzen an. Für die Verarbeitung von Kunststoffen kann hingegen das so genannte "3D-Drucken" eingesetzt werden, bei dem physikalische oder chemische Schmelz- und Härtungsprozesse zur Gestaltung des Bauteils eingesetzt werden. Als besonders geeignet für den Einsatz in der Lebensmittelindustrie hat sich aufgrund seiner hohen Festigkeit, seiner Temperaturbeständigkeit und seiner hohen Abriebfestigkeit der Kunststoff PEEK (Polyetheretherketon) erwiesen.

Eine Ausbildung des Verfahrens sieht vor, dass Schritt a) durch Sintern oder Schmelzen erfolgt. Beim Sintern oder Schmelzen wird das Ausgangsmaterial, beispielsweise ein Metallpulver, schichtweise aufgetragen und verschmolzen. Die hierzu notwendige Energie kann durch Strahlen, insbesondere Laserstrahlen, Infrarotstrahlen oder Elektronenstrahlen zugeführt werden.

Nach einer Ausgestaltung des Verfahrens wird vorgeschlagen, dass Schritt a) durch Lasersintern oder Laserschmelzen erfolgt. Beim Lasersintern oder beim Laserschmelzen, insbesondere beim selektiven Laserschmelzen ("Selective Laser Melting" = SLM) wird das Ausgangsmaterial, beispielsweise ein Metallpulver, schichtweise aufgetragen und durch einen Laserstrahl verschmolzen. Durch diese Vorgehensweise können sehr komplexe Geometrien erzeugt werden.

Als geeignete Materialien haben sich Nickelbasislegierungen (z.B. Inconel 625, Inconel 718, Inconel HX), Werkzeug- und Edelstahllegierungen (z.B. Werkstoffnummern 1.2083, 1.2709, 1.4404, 1.2343), Reintitan oder Titanlegierungen (z.B: TiAl7Nb7, TiAl6V4), Aluminiumlegierungen (z.B. AlSi2, AlSi10Mg, AlSi7Mg, AlSi9Cu3) oder Kobalt-Chromlegierungen (z.B. CoCr ASTM F75) erwiesen. Die besonders geeignete Edelstahllegierung 1.4404 ist auch unter der Bezeichnung X2CrNiMo17-12-2 bekannt (DIN EN 10 027-1). Als Laser kann beispielsweise ein Nd:YAG-Laser ("Neodymdotierter Yttrium-Aluminium-Granat-Laser") mit einem Laserstrahldurchmesser von 35 µm bis 70 µm und einer Laserleistung von wenigstens 160 W, insbesondere wenigstens 200 W eingesetzt werden. Die aufgetragenen Schichten können eine Dicke im Bereich zwischen 20 µm und 100 µm aufweisen. Die Intensität des Laserstrahls beträgt vorzugsweise wenigstens 5 x 10¹⁰ W/m². Für die Belichtungszeit des Laserstrahls haben sich Werte von wenigstens 85 µs, insbesondere wenigstens 130 µs als geeignet erwiesen.

Die Erfindung wird nachfolgend anhand einer lediglich ein bevorzugtes Ausführungsbeispiel darstellenden Zeichnung näher erläutert. In der Zeichnung zeigen:
- Fig. 1a: eine aus dem Stand der Technik bekannte Fülldüse im Querschnitt,
- Fig. 1b: einen vergrößerten Ausschnitt der Platte der Fülldüse aus Fig. 1a im Querschnitt,
- Fig. 1c: die Platte der Fülldüse aus Fig. 1a entlang der in Fig. 1a eingezeichneten Schnittebene Ic-Ic,
- Fig. 2: eine erste Ausgestaltung einer erfindungsgemäßen Vorrichtung zur Veränderung der Strahlform von fließfähigen Produkten,
- Fig. 3: eine zweite Ausgestaltung einer erfindungsgemäßen Vorrichtung zur Veränderung der Strahlform von fließfähigen Produkten,
- Fig. 4: eine dritte Ausgestaltung einer erfindungsgemäßen Vorrichtung zur Veränderung der Strahlform von fließfähigen Produkten,
- Fig. 5: eine vierte Ausgestaltung einer erfindungsgemäßen Vorrichtung zur Veränderung der Strahlform von fließfähigen Produkten, und
- Fig. 6: eine fünfte Ausgestaltung einer erfindungsgemäßen Vorrichtung zur Veränderung der Strahlform von fließfähigen Produkten.

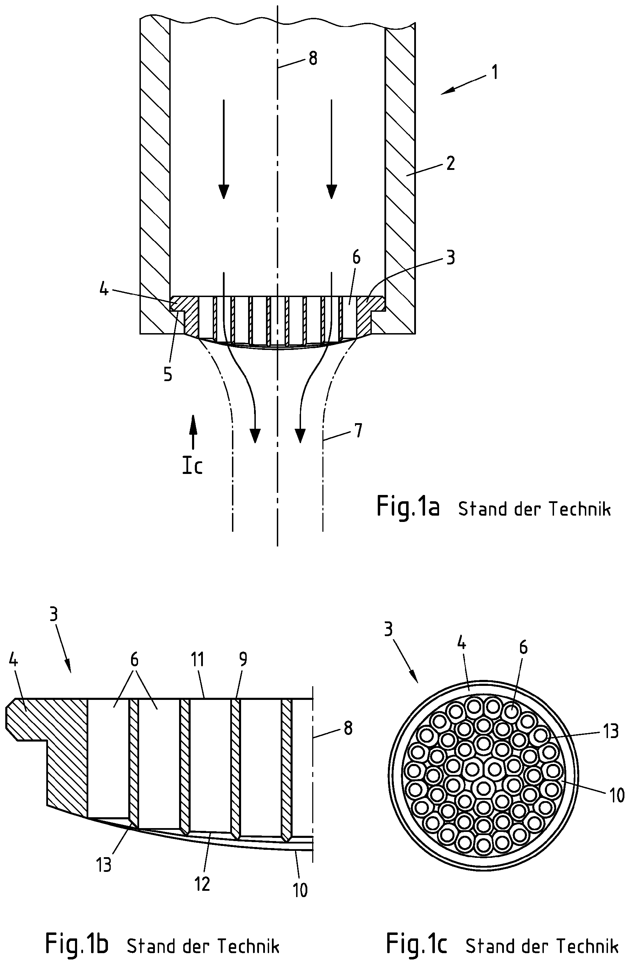

In Fig. 1 ist eine aus dem Stand der Technik bekannte Fülldüse 1 im Querschnitt dargestellt. Die Fülldüse 1 umfasst einen Körper 2 und eine Platte 3 zur Formung der Strömung. Die Platte 3 kann austauschbar in den Körper 2 eingesetzt werden, indem ein umlaufender Flansch 4, der an der Platte 3 vorgesehen ist, auf einen Vorsprung 5, der an dem Körper 2 vorgesehen ist, aufgesetzt wird. Die Platte 3 weist mehrere Löcher 6 auf, die eine - in Fig. 1a schematisch mit Pfeilen dargestellte - Durchströmung der Fülldüse 1 mit fließfähigen Produkten erlauben. Nach dem Austritt aus der Fülldüse 1 bilden die fließfähigen Produkte einen Strahl 7, dessen äußere Kontur in Fig. 1 gezeigt ist. Durch den Körper 2 und die Platte 3 verläuft zentral eine Mittelachse 8.

Fig. 1b zeigt einen vergrößerten Ausschnitt der Platte 3 der Fülldüse 1 aus Fig. 1a im Querschnitt. Die bereits im Zusammenhang mit Fig. 1a beschriebenen Bereiche der Platte 3 sind in Fig. 1b mit entsprechenden Bezugszeichen versehen. Die Platte 3 weist eine Oberseite 9 zum Eintritt der fließfähigen Produkte und eine Unterseite 10 zum Austritt der fließfähigen Produkte auf. Die Oberseite 9 ist durch die Löcher 6 mit der Unterseite 10 verbunden. Jedes der Löcher 6 weist einen Einlass 11 und einen Auslass 12 auf, wobei die Einlässe 11 der Löcher 6 der Oberseite 9 zugeordnet sind und wobei die Auslässe 12 der Löcher 6 der Unterseite 10 zugeordnet sind. Bei der in Fig. 1b dargestellten Platte 3 verlaufen alle Löcher 6 parallel zur Mittelachse 8 der Platte 3 und weisen somit keine Neigung auf. Zudem ist die Querschnittsfläche aller Löcher 6 identisch und verändert sich in Strömungsrichtung, also von dem Einlass 11 zu dem Auslass 12, nicht. Die Oberseite 9 wird durch eine Ebene gebildet, in der die Einlässe 11 der Löcher 6 liegen. Demgegenüber wird die Unterseite 10 durch eine gekrümmte Fläche gebildet, in der die Auslässe 12 der Löcher liegen. Die Unterseite 10 ist derart gekrümmt, dass diejenigen Löcher 6, die in der Nähe der Mittelachse 8 liegen, länger sind, als diejenigen Löcher 6, die im Randbereich der Platte 3 liegen. An den Rändern der Auslässe 12 können umlaufende Fasen 13 vorgesehen sein.

In Fig. 1c ist die Platte 3 der Fülldüse 1 aus Fig. 1a entlang der in Fig. 1a eingezeichneten Schnittebene Ic-Ic, also von der Unterseite betrachtet, dargestellt. Auch in Fig. 1c sind die bereits im Zusammenhang mit Fig. 1a und Fig. 1b beschriebenen Bereiche der Platte 3 mit entsprechenden Bezugszeichen versehen. Aus Gründen der besseren Übersichtlichkeit wurde in Fig. 1c auf eine Darstellung des Körpers 2 verzichtet. Fig. 1c verdeutlicht, dass eine Vielzahl von Löchern 6 dicht nebeneinander angeordnet sind und dabei nahezu die gesamte Fläche der Platte 3 einnehmen. Die in Fig. 1a, Fig. 1b und Fig. 1c dargestellte Fülldüse 1 entspricht weitgehend der aus der EP 2 078 678 A1 bekannten Fülldüse.

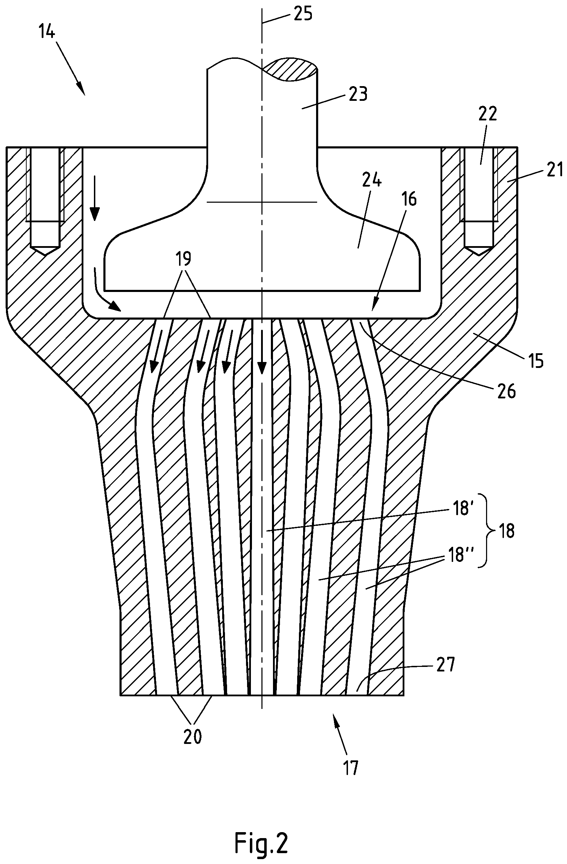

Fig. 2 zeigt eine erste Ausgestaltung einer erfindungsgemäßen Vorrichtung 14 zur Veränderung der Strahlform von fließfähigen Produkten im Querschnitt. Die Vorrichtung 14 weist ein einteilig ausgebildetes Gehäuse 15 auf, das einen Eintrittsbereich 16 zum Eintritt der fließfähigen Produkte und einen Austrittsbereich 17 zum Austritt der fließfähigen Produkte umfasst. Zwischen dem Eintrittsbereich 16 und dem Austrittsbereich 17 sind eine Vielzahl von Kanälen 18 zur Durchleitung der fließfähigen Produkte in dem Gehäuse 15 angeordnet. Die Kanäle 18 weisen jeweils einen dem Eintrittsbereich 16 zugeordneten Einlass 19 und einem dem Austrittsbereich 17 zugeordneten Auslass 20 auf. Bei der in Fig. 2 gezeigten Vorrichtung 14 sind sowohl der Eintrittsbereich 16 - und somit auch die Einlässe 19 - als auch der Austrittsbereich 17 - und somit auch die Auslässe 20 - in einer Ebene angeordnet, wobei die beiden Ebenen parallel zueinander liegen. Schließlich weist die Vorrichtung 14 an ihrer Oberseite einen umlaufenden Flansch 21 auf, in den mehrere Bohrungen 22 eingebracht sind. Über die Bohrungen 22 kann die Vorrichtung 14 beispielsweise mit einer Abfüllmaschine verbunden werden.

In Fig. 2 ist weiterhin eine Ventilstange 23 mit einem Dichtelement 24 dargestellt. Diese Bauteile gehören zwar nicht zur Vorrichtung 14, dienen jedoch der Erläuterung ihrer Funktionsweise. Um die - in Fig. 2 schematisch mit Pfeilen dargestellte - Durchströmung der Vorrichtung 14 zu unterbrechen, wird die Ventilstange 23 abgesenkt, so dass das Dichtelement 24 auf den Eintrittsbereich 16 gedrückt wird und die dort angeordneten Einlässe 19 der Kanäle 18 verschließt. Durch die Ventilstange 23, das Dichtelement 24 und die Vorrichtung 14 verläuft zentral eine Mittelachse 25.

Bei der in Fig. 2 beispielhaft dargestellten Vorrichtung 14 können die Kanäle 18 in einen zentralen Kanal 18' und in mehrere außermittige Kanäle 18" unterteilt werden. Die Mittelachse des zentralen Kanals 18' entspricht der Mittelachse 25 der Vorrichtung; der zentrale Kanal 18' verläuft also gerade nach unten und steht senkrecht auf den beiden Ebenen des Eintrittsbereiches 16 und des Austrittsbereiches 17. Die Mittelachsen der außermittigen Kanäle 18" - und somit auch die außermittigen Kanäle 18" selbst - verlaufen hingegen gekrümmt und sind zudem teilweise geneigt. Bei der in Fig. 2 exemplarisch gezeigten Vorrichtung 14 sind alle außermittigen Kanäle 18" gekrümmt, wobei sich die Krümmung nur über einen Teilbereich der Kanäle 18" erstreckt, an den sich geneigte aber nicht-gekrümmte Bereiche anschließen.

Die Kanäle 18 der in Fig. 2 beispielhaft dargestellten Vorrichtung 14 weisen eine erste Querschnittsfläche 26 und eine zweite Querschnittsfläche 27 auf, wobei die erste Querschnittsfläche 26 an den Einlässen 19 gemessen wird und wobei die zweite Querschnittsfläche 27 an den Auslässen 20 gemessen wird. Die Kanäle 18 der in Fig. 2 gezeigten Vorrichtung 14 zeichnen sich dadurch aus, dass die zweite Querschnittsfläche 27 jedes Kanals 18 größer ist als erste Querschnittsfläche 28 dieses Kanals 18. Dies betrifft sowohl den zentralen Kanal 18' als auch die außermittigen Kanäle 18". Mit anderen Worten vergrößert sich die Querschnittsfläche der Kanäle 18 in Strömungsrichtung gesehen von ihren Einlässen 19 zu ihren Auslässen 20.

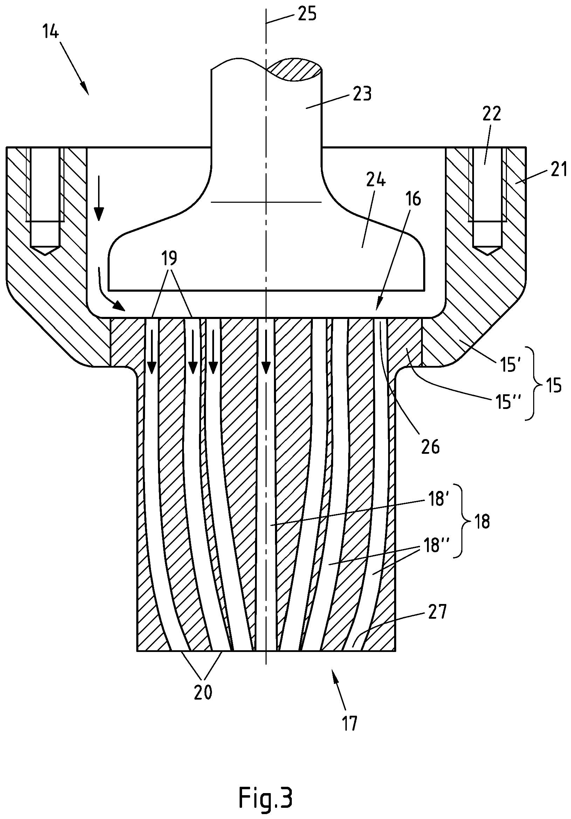

In Fig. 3 ist eine zweite Ausgestaltung einer erfindungsgemäßen Vorrichtung 14 zur Veränderung der Strahlform von fließfähigen Produkten im Querschnitt dargestellt. Die bereits im Zusammenhang mit der ersten Ausgestaltung (Fig. 2) der Vorrichtung 14 beschriebenen Bereiche sind in Fig. 3 mit entsprechenden Bezugszeichen versehen. Der wesentliche Unterschied zwischen der ersten und der zweiten Ausgestaltung der Vorrichtung 14 liegt darin, dass das Gehäuse 15 zweiteilig ausgebildet ist und ein oberes Gehäuseteil 15' und ein unteres Gehäuseteil 15" umfasst. Die Kanäle 18 sind in dem unteren Gehäuseteil 15" angeordnet, das austauschbar ist. Ein weiterer Unterschied zu der ersten Ausgestaltung (Fig. 2) der Vorrichtung liegt in einer anders geformten Krümmung der außermittigen Kanäle 18". Einige der außermittigen Kanäle 18" sind beispielsweise durchgehend, also entlang ihrer gesamten Länge, gekrümmt.

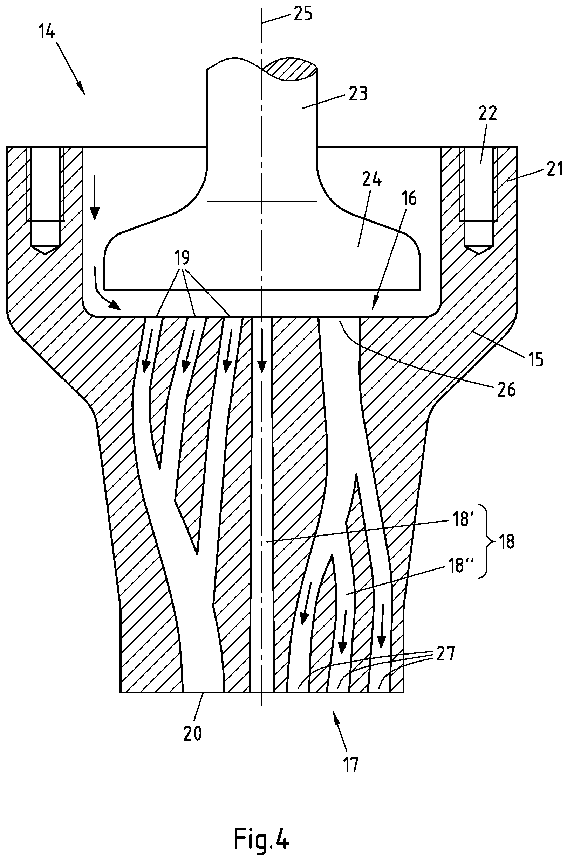

Fig. 4 zeigt eine dritte Ausgestaltung einer erfindungsgemäßen Vorrichtung 14 zur Veränderung der Strahlform von fließfähigen Produkten im Querschnitt. Die bereits im Zusammenhang mit der ersten Ausgestaltung (Fig. 2) und der zweiten Ausgestaltung (Fig. 3) der Vorrichtung 14 beschriebenen Bereiche sind in Fig. 4 mit entsprechenden Bezugszeichen versehen. Der wesentliche Unterschied zwischen der dritten Ausgestaltung und den beiden ersten Ausgestaltungen der Vorrichtung 14 liegt darin, dass bei der dritten Ausgestaltung die außermittigen Kanäle 18" Verzweigungen aufweisen.

Der in Fig. 4 rechts von der Mittelachse 25 dargestellte außermittige Kanal 18" weist lediglich einen Einlass 19 mit einer ersten Querschnittsfläche 26 auf. Im Verlauf dieses Kanals 18" zweigt zunächst einer erster Arm und anschließend ein zweiter Arm ab, so dass sich dieser Kanal 18" in Arme aufteilt. Dem entsprechend weist der rechts von der Mittelachse 25 dargestellte Kanal 18" auch drei Auslässe 20 auf, die gemeinsam eine zweite Querschnittsfläche 27 bilden. Der in Fig. 4 links von der Mittelachse 25 dargestellte Kanal 18" weist hingegen drei Einlässe 19 auf, die gemeinsam eine erste Querschnittsfläche 26 bilden. Im Verlauf dieses Kanals 18" vereinigen sich drei Arme des Kanals 18" zu einem einzelnen Arm. Dem entsprechend weist der links von der Mittelachse 25 dargestellte Kanal 18" auch nur einen Auslass 20 mit einer zweiten Querschnittsfläche 27 auf. Der zentrale Kanal 18' kann sich, anders als in Fig. 4 dargestellt, ebenfalls in mehrere Arme aufteilen oder aus der Vereinigung mehrerer Arme entstehen. Alternativ hierzu kann der zentrale Kanal 18' auch weggelassen werden.

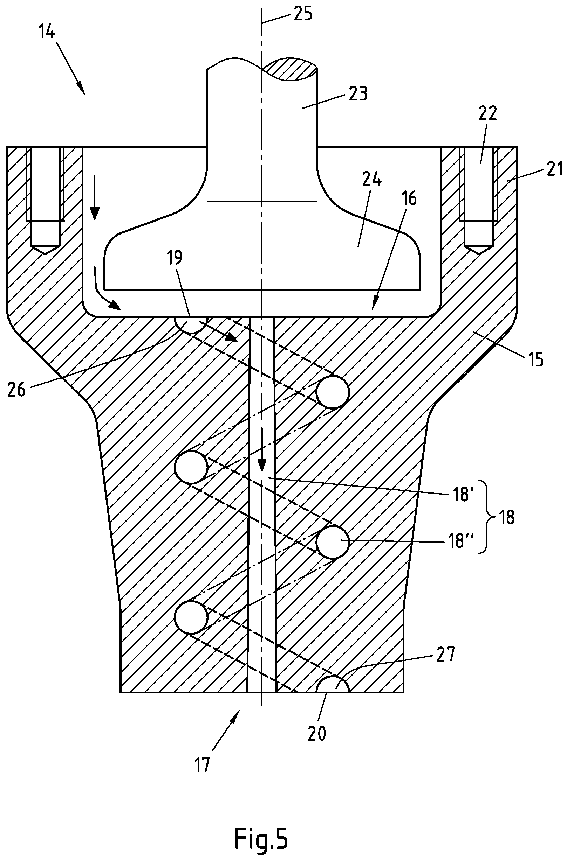

In Fig. 5 ist eine vierte Ausgestaltung einer erfindungsgemäßen Vorrichtung 14 zur Veränderung der Strahlform von fließfähigen Produkten im Querschnitt dargestellt. Die bereits im Zusammenhang mit der ersten (Fig. 2), zweiten (Fig. 3) und dritten (Fig. 4) Ausgestaltung der Vorrichtung 14 beschriebenen Bereiche sind in Fig. 5 mit entsprechenden Bezugszeichen versehen. Der wesentliche Unterschied zwischen der vierten Ausgestaltung und den ersten drei Ausgestaltungen der Vorrichtung 14 liegt darin, dass bei der vierten Ausgestaltung der außermittige Kanal 18" eine abweichende Gestaltung aufweist.

Der in Fig. 5 gezeigte außermittige Kanal 18" verläuft spiralförmig um die Mittelachse 25 herum, ohne diese zu schneiden. Somit verläuft der außermittige Kanal 18" auch um den auf der Mittelachse 25 liegenden zentralen Kanal 18' herum. Der außermittige Kanal 18" weist keine Verzweigungen auf und verbindet daher einen einzigen Einlass 19 mit einem einzigen Auslass 20, wobei der Einlass 19 eine erste Querschnittsfläche 26 aufweist und wobei der Auslass 20 eine zweite Querschnittsfläche 27 aufweist. Der außermittige Kanal 18" kann sich jedoch alternativ hierzu, und anders als in Fig. 5 dargestellt, auch in mehrere Arme aufteilen oder aus der Vereinigung mehrerer Arme entstehen. Zudem muss der außermittige Kanal 18" nicht zwingend um die Mittelachse 25 herum verlaufen, sondern kann auch vollständig neben der Mittelachse 25 und neben dem zentralen Kanal 18' angeordnet sein.

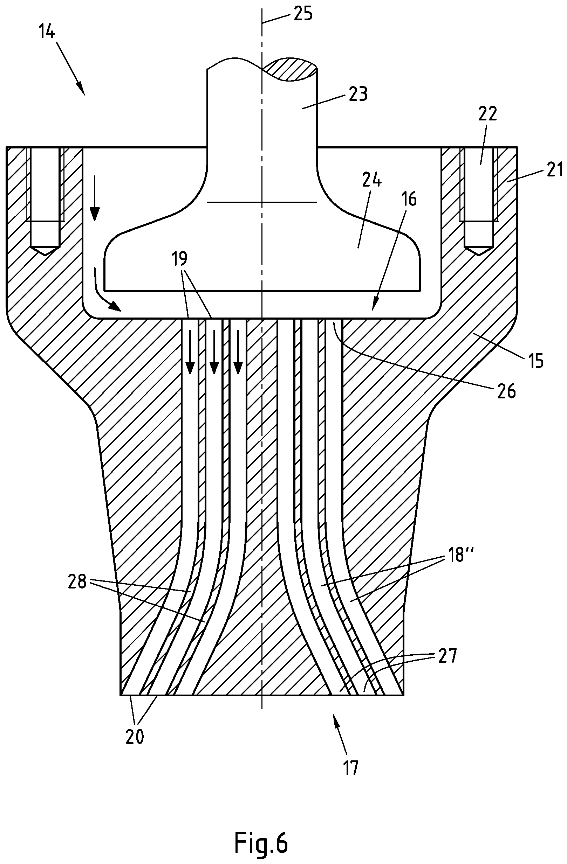

Fig. 6 zeigt schließlich eine fünfte Ausgestaltung einer erfindungsgemäßen Vorrichtung 14 zur Veränderung der Strahlform von fließfähigen Produkten. Die bereits im Zusammenhang mit der ersten (Fig. 2), zweiten (Fig. 3) dritten (Fig. 4), und vierten (Fig. 5) Ausgestaltung der Vorrichtung 14 beschriebenen Bereiche sind in Fig. 6 mit entsprechenden Bezugszeichen versehen. Der wesentliche Unterschied zwischen der fünften Ausgestaltung und den ersten vier Ausgestaltungen der Vorrichtung 14 liegt erneut in einer abweichenden Gestaltung der Kanäle 18.

Bei der in Fig. 6 dargestellten Ausgestaltung der Vorrichtung 14 sind ausschließlich außermittige Kanäle 18" vorhanden; ein zentraler Kanal 18' ist hingegen nicht vorhanden. Alle außermittigen Kanäle 18" sind nach außen gekrümmt und leiten die durch sie fließenden Teilströme daher von der Mittelachse 25 weg. Die außermittigen Kanäle 18" können in zwei Gruppen eingeteilt werden. Die in Fig. 6 links dargestellte Gruppe umfasst drei parallel verlaufende außermittige Kanäle 18", die durch dünne Trennwände 28 mit einer konstanten Wandstärke voneinander getrennt sind und die durch sie fließenden Teilströme nach links leiten. Die in Fig. 6 rechts dargestellte Gruppe umfasst drei parallel verlaufende außermittige Kanäle 18", die durch dünne Trennwände 28 mit einer konstanten Wandstärke voneinander getrennt sind und die durch sie fließenden Teilströme nach rechts leiten. Die Stärke der Trennwände 28 kann im Bereich zwischen 0,2 mm und 8,5 mm liegen. Vorzugsweise berühren sich die aus den beiden Gruppen von außermittigen Kanälen 18" austretenden Teilströme nicht, so dass es sich bei der in Fig. 6 dargestellten Ausgestaltung der Vorrichtung 14 um einen "Seitenstrahler" handelt. Alternativ hierzu könnten die außermittige Kanäle 18" derart angeordnet sein, dass ein Strahl mit einem um die Mittelachse 25 herum verlaufenden, geschlossenen Querschnitt aus der Vorrichtung 14 austritt.

Die Merkmale der Vorrichtung 14, die zuvor im Zusammenhang mit ihrer ersten bis fünften Ausgestaltung (Fig. 2 bis Fig. 6) näher beschrieben wurden, können in vielfacher Weise miteinander kombiniert werden. Insbesondere können die Art des Gehäuses 15 (einteilig bzw. mehrteilig) sowie die Anzahl und die Form der Kanäle 18 (gerade, gekrümmt, geneigt, verzweigt, spiralförmig) miteinander kombiniert werden.

### Bezugszeichenliste:

- 1:: Fülldüse
- 2:: Körper
- 3:: Platte
- 4:: Flansch
- 5:: Vorsprung
- 6:: Loch
- 7:: Strahl
- 8:: Mittelachse
- 9:: Oberseite
- 10:: Unterseite
- 11:: Einlass
- 12:: Auslass
- 13:: Fase
- 14:: Vorrichtung
- 15, 15', 15":: Gehäuse
- 16:: Eintrittsbereich
- 17:: Austrittsbereich
- 18, 18', 18":: Kanal
- 19:: Einlass
- 20:: Auslass
- 21:: Flansch
- 22:: Bohrung
- 23:: Ventilstange
- 24:: Dichtelement
- 25:: Mittelachse
- 26:: erste Querschnittsfläche
- 27:: zweite Querschnittsfläche
- 28:: Trennwand

## Patentansprüche

1. Vorrichtung (14) zur Veränderung der Strahlform von fließfähigen Produkten, insbesondere von Nahrungsmitteln, umfassend:
- einen Eintrittsbereich (16) zum Eintritt der fließfähigen Produkte,
- einen Austrittsbereich (17) zum Austritt der fließfähigen Produkte, und
- mehrere Kanäle (18) zur Durchleitung der fließfähigen Produkte,
- wobei jeder Kanal (18) wenigstens einen dem Eintrittsbereich (16) zugeordneten Einlass (19) und wenigstens einen dem Austrittsbereich (17) zugeordneten Auslass (20) aufweist,
- wobei wenigstens einer der Kanäle (18) wenigstens abschnittsweise gekrümmt ist, und
- **dadurch gekennzeichnet, dass** die Wandflächen der Kanäle (18) einstückig ausgebildet sind, und dass
- die Vorrichtung ein einteiliges Gehäuse (15) aufweist, in dem die Kanäle (18) angeordnet sind, und das durch ein generatives Fertigungsverfahren hergestellt ist, oder dass
- die Vorrichtung ein mehrteiliges Gehäuse (15', 15") aufweist, wobei derjenige Teil des Gehäuses (15"), in dem die gekrümmten Kanäle (18) angeordnet sind, einstückig ausgebildet ist und durch ein generatives Fertigungsverfahren hergestellt ist.

2. Vorrichtung nach Anspruch 1,
**dadurch gekennzeichnet, dass**
alle außermittigen Kanäle (18") wenigstens abschnittsweise gekrümmt sind.

3. Vorrichtung nach Anspruch 1 oder 2,
**dadurch gekennzeichnet, dass**
wenigstens einer der Kanäle (18) durchgehend gekrümmt ist.

4. Vorrichtung nach einem der Ansprüche 1 bis 3,
**dadurch gekennzeichnet, dass**
alle außermittigen Kanäle (18") durchgehend gekrümmt sind.

5. Vorrichtung nach einem der Ansprüche 1 bis 4,
**dadurch gekennzeichnet, dass**
die Einlässe (19) und/oder die Auslässe (20) der Kanäle (18) in einer Ebene angeordnet sind.

6. Vorrichtung nach einem der Ansprüche 1 bis 5,
**dadurch gekennzeichnet, dass**
die Anzahl der Kanäle (18) wenigstens 5 beträgt und insbesondere im Bereich zwischen 10 und 100 liegt.

7. Vorrichtung nach einem der Ansprüche 1 bis 6,
**dadurch gekennzeichnet, dass**
die Summe der Einlässe (19) eines Kanals (18) eine erste Querschnittsfläche (26) bilden und die Summe der Auslässe (20) eines Kanals (18) eine zweite Querschnittsfläche (27) bilden, und dass die zweite Querschnittsfläche (27) wenigstens eines Kanals (18) größer ist als die erste Querschnittsfläche (26) dieses Kanals (18).

8. Vorrichtung nach einem der Ansprüche 1 bis 7,
**dadurch gekennzeichnet, dass**
die Mittelachsen der außermittigen Kanäle (18") gegenüber der Mittelachse (25) der Vorrichtung (14) um einen Neigungswinkel (α) geneigt angeordnet sind.

9. Vorrichtung nach einem der Ansprüche 1 bis 8,
**dadurch gekennzeichnet, dass**
wenigstens ein Kanal (18) wenigstens eine Verzweigung aufweist.

10. Verwendung einer Vorrichtung (14) nach einem der Ansprüche 1 bis 9 zur Abfüllung von Nahrungsmitteln, insbesondere zur aseptischen Abfüllung von Nahrungsmitteln.

11. Verfahren zur Herstellung einer Vorrichtung (14) nach einem der Ansprüche 1 bis 9, umfassend den folgenden Schritt:
a) Erzeugen der Vorrichtung (14) mit den darin angeordneten Kanälen (18) durch ein generatives Fertigungsverfahren.

12. Verfahren nach Anspruch 11,
**dadurch gekennzeichnet, dass**
Schritt a) durch Sintern oder Schmelzen erfolgt.

13. Verfahren nach Anspruch 11 oder 12,
**dadurch gekennzeichnet, dass**
Schritt a) durch Lasersintern oder Laserschmelzen erfolgt.

## Claims

1. Device (14) for modifying the jet shape of flowable products, in particular foodstuffs, comprising:
- an inlet region (16) for the inlet of the flowable products,
- an outlet region (17) for the outlet of the flowable products and
- a plurality of channels (18) for passage of the flowable products,
- wherein each channel (18) has at least one inlet (19) assigned to the inlet region (16) and at least one outlet (20) assigned to the outlet region (17),
- wherein at least one of the channels (18) is curved at least in sections and
- **characterised in that**
the wall surfaces of the channels (18) are integrally designed and **in that**
- the device has a one-part housing (15) in which the channels (18) are arranged and which is manufactured by a generative manufacturing process or **in that**
- the device has a multi-part housing (15', 15"), wherein the part of the housing (15"), in which the curved channels (18) are arranged, is integrally designed and is manufactured by a generative manufacturing process.

2. Device according to Claim 1, **characterised in that** all eccentric channels (18") are curved at least in sections.

3. Device according to Claim 1 or 2, **characterised in that** at least one of the channels (18) is continuously curved.

4. Device according to any one of Claims 1 to 3, **characterised in that** all eccentric channels (18") are continuously curved.

5. Device according to any one of Claims 1 to 4, **characterised in that** the inlets (19) and/or the outlets (20) of the channels (18) are arranged in one plane.

6. Device according to any one of Claims 1 to 5, **characterised in that** the number of the channels (18) is at least 5 and in particular is in the range between 10 and 100.

7. Device according to any one of Claims 1 to 6, **characterised in that** the sum of the inlets (19) of a channel (18) forms a first cross-sectional area (26) and the sum of the outlets (20) of a channel (18) forms a second cross-sectional area (27) and **in that** the second cross-sectional area (27) of at least one channel (18) is greater than the first cross-sectional area (26) of this channel (18).

8. Device according to any one of Claims 1 to 7, **characterised in that** the centre axes of the eccentric channels (18") are arranged inclined towards the centre axis (25) of the device (14) by an inclination angle (α).

9. Device according to any one of Claims 1 to 8, **characterised in that** at least one channel (18) has at least one branching.

10. Use of a device (14) according to any one of Claims 1 to 9 for filling foodstuffs, in particular for aseptically filling foodstuffs.

11. Method for manufacturing a device (14) according to any one of Claims 1 to 9, comprising the following step:
a) producing the device (14) with the channels (18) arranged therein by a generative manufacturing process.

12. Method according to Claim 11, **characterised in that** step a) is carried out by sintering or melting.

13. Method according to Claim 11 or 12, **characterised in that** step a) is carried out by laser sintering or laser melting.

## Revendications

1. Dispositif (14) pour modification de la forme du jet de produits fluides, produits alimentaires notamment, comprenant :
- une zone d'entrée (16) pour l'entrée des produits fluides,
- une zone de sortie (17) pour la sortie des produits fluides, et
- plusieurs canaux (18) pour l'acheminement des produits fluides,
- chaque canal (18) présentant au moins une arrivée (19) affectée à la zone d'entrée (16) et au moins un écoulement (20) affecté à la zone de sortie (17),
- pour lequel au moins l'un des canaux (18) est au moins courbé par tronçons, et
**caractérisé en ce que**
les parois des canaux (18) sont constituées d'une seule pièce et que
- le dispositif présente un boîtier (15) en une partie, dans lequel sont disposés les canaux (18) et est réalisé par un procédé de fabrication génératif ou que
- le dispositif présente un boîtier en plusieurs parties (15', 15"), la partie considérée du boîtier (15") dans laquelle sont disposés les canaux courbés (18) est constituée d'une seule pièce et est réalisée par un procédé de fabrication génératif.

2. Dispositif selon la revendication 1,
**caractérisé en ce que**
tous les canaux (18") excentrés sont au moins courbés par tronçons.

3. Dispositif selon la revendication 1 ou 2,
**caractérisé en ce**
**qu'**au moins un des canaux (18) est courbé en continu.

4. Dispositif selon l'une des revendications 1 à 3,
**caractérisé en ce que**
tous les canaux excentrés (18") sont courbés en continu.

5. Dispositif selon l'une des revendications 1 à 4,
**caractérisé en ce**
les arrivées (19) et/ou les écoulements (20) des canaux (18) sont situés sur un plan.

6. Dispositif selon l'une des revendications 1 à 5,
**caractérisé en ce que**
le nombre des canaux (18) est de 5 minimum et se situe notamment dans une plage comprise entre 10 et 100.

7. Dispositif selon l'une des revendications 1 à 6,
**caractérisé en ce que**
la somme des arrivées (19) d'un canal (18) forme une première section transversale (26) et la somme des écoulements (20) d'un canal (18) une deuxième section transversale (27), et que la deuxième section transversale (27) d'au moins un canal (18) est plus grande que la première section transversale (26) de ce canal (18).

8. Dispositif selon l'une des revendications 1 à 7,
**caractérisé en ce que**
les axes médians des canaux excentrés (18") par rapport à l'axe médian (25) du dispositif (14) sont disposés inclinés selon un angle d'inclinaison (α).

9. Dispositif selon l'une des revendications 1 à 8,
**caractérisé en ce**
**qu'**au moins un canal (18) présente au moins une ramification.

10. Utilisation d'un dispositif (14) selon l'une des revendications 1 à 9 pour le remplissage de produits alimentaires, et notamment le remplissage aseptique de produits alimentaires.

11. Procédé destiné à la fabrication d'un dispositif (14) selon l'une des revendications 1 à 9, comprenant l'étape suivante :
a) réalisation du dispositif (14) avec les canaux (18) disposés à l'intérieur par un procédé de fabrication génératif.

12. Procédé selon la revendication 11
**caractérisé en ce que**
l'étape a) est réalisée par frittage ou fusion.

13. Procédé selon la revendication 11 ou 12,
**caractérisé en ce que**
l'étape a) est réalisée par frittage laser ou fusion laser.
